# EUROPÄISCHE PATENTSCHRIFT

(11) **EP 2 881 519 B1**
(45) Veröffentlichungstag und Bekanntmachung des Hinweises auf die Patenterteilung: **14.11.2018**
(21) Anmeldenummer: 14185939.7
(22) Anmeldetag: 23.09.2014
(51) Int. Cl.: E04F 15/02, B32B 25/10, B32B 25/14, B32B 25/18, B32B 3/28, E04F 15/06, E04F 15/10, E04F 15/18

(54) **Bodenplatte**
Base plate
Panneau de sol

(30) Priorität: 05.12.2013 DE 102013113538
(43) Veröffentlichungstag der Anmeldung: 10.06.2015
(73) Patentinhaber: Queck, Volker, 08328 Stützengrün (DE)
(72) Erfinder: Queck, Volker, 08328 Stützengrün (DE)
(74) Vertreter: Lindner Blaumeier Patent- und Rechtsanwälte

(56) Entgegenhaltungen:
- EP-A2- 1 359 265
- DE-U1- 9 004 451
- US-A1- 2011 151 174

## Beschreibung

Die Erfindung betrifft eine Bodenplatte zur schwimmenden Verlegung, bestehend aus einer Tragplatte mit einer seitlichen Nut-Feder-Struktur und einer auf dieser aufgebrachten, die Sichtfläche bildenden Oberflächenschicht.

Derartige Bodenplatten kommen in Form von schnell und einfach verlegbaren Parkettplatten mannigfaltig zum Einsatz. Sie bestehen üblicherweise aus einer Tragplatte, zumeist in Form einer Faserplatte, auf die eine Oberflächenschicht aufgebracht ist, die die Sichtfläche bildet. Diese Oberflächenschicht ist üblicherweise eine Kunststofffolie, die auf die Trägerplatte kaschiert wird. Diese Kunststofffolie weist eine für übliche Beanspruchungen beispielsweise im Wohnbereich ausreichende Härte und Abriebfestigkeit auf. Eine solche Kunststofffolie ist in nahezu beliebiger Farbe respektive mit beliebiger Struktur herstellbar, so dass beispielsweise auch einem Originalholz ähnelnde Parkettplatten hergestellt werden können und das gesamte verlegte Parkett eine Anmutung eines Vollholzparketts.

In Bereichen, in denen sich üblicherweise viele Menschen bewegen, wie beispielsweise in Eingangshallen von Firmen oder öffentlichen Einrichtungen, Aufenthaltsräumen an Bahn- oder Flughäfen, längeren Laufwegen innerhalb von Gebäuden etc. sind derartige Bodenplatten jedoch aufgrund der dann gegebenen Beanspruchung nicht verwendbar. Denn sie halten dieser Dauerbelastung, verbunden mit durch die auf ihnen laufenden Personen eingebrachter Verschmutzung etc. nicht Stand und werden unansehnlich respektive beschädigt.

EP1359265A2 offenbart eine Bodenplatte mit den Merkmalen des Oberbegriffs des Anspruchs 1.

Der Erfindung liegt damit das Problem zugrunde, eine Bodenplatte anzugeben, die demgegenüber verbessert ist und einerseits eine extrem hohe Standfestigkeit, andererseits auch ein gleichbleibend ansehnliches Äußeres aufweist.

Zur Lösung dieses Problems ist bei einer Bodenplatte der eingangs genannten Art erfindungsgemäß vorgesehen, dass die Oberflächenschicht eine Edelstahlplatte ist.

Die erfindungsgemäße Bodenplatte weist eine auf die Tragplatte aufgebrachte Edelstahlplatte, die die Oberflächenschicht bildet, auf. Diese Edelstahlplatte, die eine Dicke von beispielsweise 0,5 - 3 mm aufweisen kann, ist extrem robust und wird durch eine auch grobe Beanspruchung, wie oben dargestellt, nicht in Mitleidenschaft gezogen. Selbst bei extremer Beanspruchung, wenn also durch die Benutzer Steinchen oder Sandkörnchen etc. mit eingetragen werden, ist zu keinem Zeitpunkt die Gefahr gegeben, dass die Edelstahlplatte abgerieben wird, mithin also immer dünner wird respektive Löcher bekommt. Im Gegenteil, die extreme Härte der Edelstahlplatte, selbst wenn diese nur beispielsweise 0,5 mm stark ist, wirkt sich vorteilhaft auf eine sehr lange Standfestigkeit aus.

Darüber hinaus ist die Edelstahlplatte auch vom Äußeren her stets ansehnlich, da selbst eine extreme Beanspruchung das Äußere der Edelstahlplatte nicht oder nur unwesentlich beeinträchtigt. Das heißt, dass die erfindungsgemäße Bodenplatte folglich langzeitstabil ist und extremen Belastungen ausgesetzt werden kann, gleichzeitig aber ihr ansehnliches Äußeres behält.

Die Verlegung der erfindungsgemäßen Bodenplatten ist jedoch gleichermaßen einfach wie bisher bekannter Platten, nachdem die Bodenplatten zu einer großen Fläche durch die Nut-Feder-Verbindung zusammengesetzt werden können. Es ergibt sich folglich ein sehr ansehnlicher, großflächiger Plattenverbund, die Bodenfläche ist als große Edelstahlfläche ausgeführt, die eine einheitliche, angenehme und moderne Ansicht bietet und durch das Verlegemuster sehr ansprechend strukturiert ist.

Die Edelstahlplatte ist bevorzugt mit der Tragplatte über eine Klebeverbindung verbunden. Diese Klebeverbindung kann beispielsweise ein Zwei-Komponenten-Kleber sein, wobei letztlich die konkrete Wahl des verwendeten Klebemittels davon abhängt, welcher Art die Tragplatte ist. Denn als Tragplatte kann erfindungsgemäß eine Tragplatte aus einem Kunststoff verwendet werden. Verwendbar sind hier alle thermoplastischen oder duroplastischen Polymere, die gegebenenfalls auch faserverstärkt oder partikelverstärkt sein können. Je nach verwendeter Materialkombination aus Edelstahlplatte und dem entsprechenden Kunststoffmaterial ist folglich auch das Klebemittel zu wählen. Alternativ zur Verwendung von Kunststofftragplatten ist es auch denkbar, Tragplatten aus mittel- oder hochdichten Faserplatten zu verwenden. Auch diese Faserplatten eignen sich hervorragend als Tragplatten, eine Anbindung der Edelstahlplatte über eine entsprechende Klebeverbindung ist auch hier ohne weiteres möglich. Diese Tragplatten aus Faserverbundwerkstoff sind bevorzugt imprägniert, um eine Wasseraufnahme auszuschließen, bzw. weisen ein von Haus aus minimales Feuchteaufnahmevermögen auf. Das heißt, dass selbst eine Verwendung dieser erfindungsgemäßen Bodenplatte in Feuchtbereichen denkbar wäre, was im Falle von Kunststofftragplatten ohnehin möglich ist.

Die Edelstahlplatte kann an ihren oberen Rändern eine Fase aufweisen, das heißt, dass die jeweilige Kante mit einer Fase gebrochen ist. Die Fasen zweier benachbarter Bodenplatten ergänzen sich miteinander, so dass sich eine längslaufende Rille ergibt, was sehr ansehnlich ist. Eine solche Fase muss nicht zwingend vorgesehen sein.

Weiterhin ist es denkbar, dass die Edelstahlplatte mit ihren Rändern umgebogen ist und gegebenenfalls die Tragplatte randseitig übergreift. Auf diese Weise kann ein seitlicher Abschluss der Tragplatte realisiert werden.

Die Edelstahlplatte selbst kann an ihrer Sichtseite eine Strukturierung aufweisen, die letztlich beliebiger Natur ist. Sie kann gebürstet sein, mithin also nur eine leichte oberflächliche Struktur aufweisen, sie kann aber auch grobstrukturiert sein, beispielsweise durch oberflächlich ausgebildete Erhebungen, die gleichzeitig der Verbesserung der Rutschfestigkeit dienen und Ähnliches. Hinsichtlich der Strukturierung sind letztlich keine Grenzen gesetzt.

Erfindungsgemäß ist an der Unterseite der Tragplatte eine mattenartige Dämmschicht vorgesehen, die einerseits als Trittschalldämmung dient, und andererseits, da es sich bei dieser Dämmschicht bevorzugt um eine Gummimatte handelt, auch der unterseitigen Wasserabweisung dient. Diese Dämmschicht wird bevorzugt ebenfalls über eine Klebeverbindung auf die Tragplatte aufgebracht, wobei natürlich auch hier das verwendete Klebemittel davon abhängt, aus welchem Material die Tragplatte und die Dämmschicht ist. Kommt eine Gummimatte zum Einsatz, so kann diese Gummimatte durch einen entsprechenden Vulkanisierungskleber oder Ähnlichem verklebt sein.

Die Erfindung sieht vor, dass die Dämmschicht an ihrer Unterseite eine der Hinterlüftung dienende Strukturierung aufweist, in Form mehrerer, vorzugsweise geradlinig verlaufender Nuten, die sich von einer Dämmschichtseite zur gegenüberliegenden Seite erstrecken. Diese Strukturierung in Form der Nuten ermöglicht es, dass eine gewisse Luftzirkulation bzw. Belüftung möglich ist, was im verlegten Zustand von Vorteil ist.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Figur 1: eine Prinzipdarstellung einer erfindungsgemäßen Bodenplatte einer ersten Ausführungsform,
- Figur 2: eine vergrößerte Teilansicht der Bodenplatte aus Figur 1,
- Figur 3: eine vergrößerte Teilansicht einer erfindungsgemäßen Bodenplatte einer zweiten Ausführungsform,
- Figur 4: die Ansicht aus Figur 3 von der Unterseite her,
- Figur 5: eine Schnittansicht durch eine erfindungsgemäße Bodenplatte einer dritten Ausführungsform in einer Teilansicht, und
- Figur 6: eine Schnittansicht durch eine erfindungsgemäße Bodenplatte einer vierten Ausführungsform in einer Teilansicht.

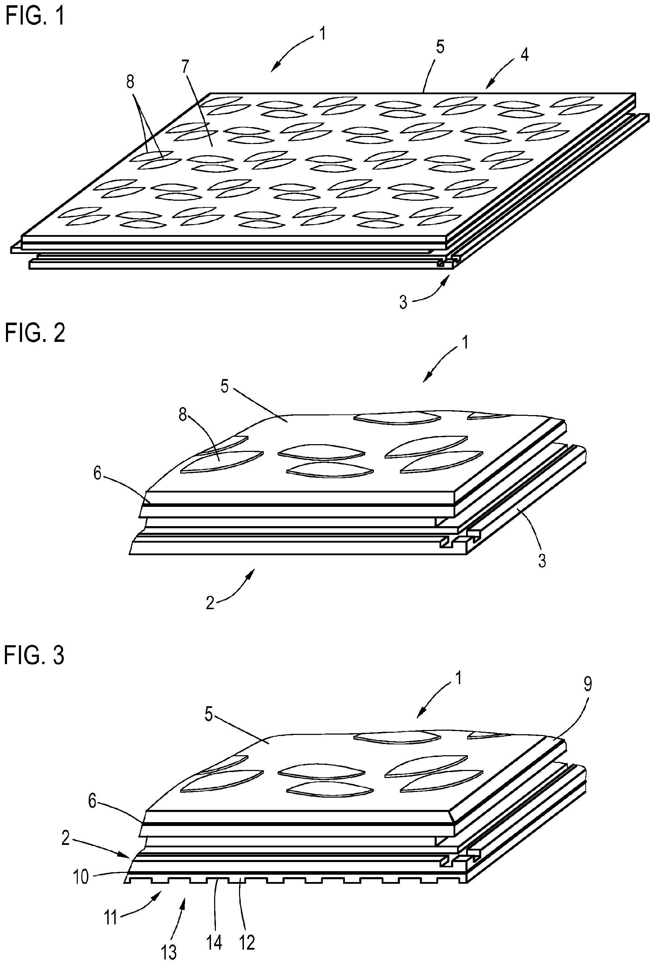

Figur 1 zeigt eine erfindungsgemäße Bodenplatte 1, bestehend aus einer Tragplatte 2, hier einer Tragplatte aus Kunststoff, die an ihren Längsrändern eine Nut-Feder-Struktur 3 aufweist. Diese Nut-Feder-Struktur ermöglicht es, zwei nebeneinander angeordnete Bodenplatten 1 durch eine Klickverbindung miteinander zu verbinden und so aus mehreren Bodenplatten eine große Fläche zu bilden, wobei die Bodenplatten schwimmend verlegt werden.

Bei dem Tragplattenmaterial kann es sich um einen beliebigen thermoplastischen oder duroplastischen Kunststoff handeln, beispielsweise PVC oder Ähnlichem. Die Tragplatte aus Kunststoff kann z. B. faserverstärkt sein, um ihre Festigkeit noch weiter zu erhöhen, was jedoch nicht zwingend ist.

Auf die Tragplatte 2 ist eine Oberflächenschicht 4 in Form einer Edelstahlplatte 5 aufgebracht. Die Verbindung von Tragplatte 2 und Edelstahlplatte 5 erfolgt über eine Klebeschicht 6, siehe die vergrößerte Schnittansicht in Figur 2. Als Kleber kann ein beliebiger Kleber, beispielsweise ein Ein-Komponenten- oder ein ZweiKomponenten-Kleber verwendet werden, der eine hinreichend feste Verbindung von Edelstahlplatte 5 und Kunststoff-Tragplatte 2 ermöglicht. Die Klebeschicht wird bevorzugt großflächig aufgetragen, um einen großflächigen Plattenverbund zu erreichen.

Die Oberseite 7 der Edelstahlplatte 5 weist im gezeigten Beispiel eine Strukturierung 8 auf, hier in Form von linsenförmigen leichten Erhebungen, die der Verbesserung der Rutschfestigkeit dienen. Eine solche Oberflächenstrukturierung 8 kann aber in beliebiger anderer Weise ausgeführt sein, beispielsweise durch eine leichte Riffelung oder andersartige Rillenstrukturen, andere geometrische Erhebungen oder durch eine Bürstenstruktur. Hier sind letztlich keine Grenzen gesetzt, solange nach wie vor eine geschlossene Fläche verbleibt.

Figur 2 zeigt in Form einer vergrößerten Teilansicht einen Ausschnitt aus dem Kantenbereich der Bodenplatte 1 aus Figur 1. Ersichtlich ist die Nut-Feder-Struktur 3, die sich durch unterschiedliche seitliche Verbindungsabschnitte auszeichnet und in an sich bekannter Weise eine einfache Klickverbindung zweier nebeneinander anzuordnender Bodenplatten 1 ermöglicht. Die Dicke der Edelstahlplatte 5 sollte im Bereich von 0,5 - 3 mm liegen, wobei im gezeigten Ausführungsbeispiel selbstverständlich die Plattenstärken nicht maßstabsgerecht sind, es handelt sich lediglich um Prinzipdarstellungen.

Figur 3 zeigt eine Teilansicht einer weiteren Ausführungsform einer erfindungsgemäßen Bodenplatte 1, wobei für gleiche Bauteile gleiche Bezugszeichen verwendet werden. Vorgesehen ist wiederum eine Tragplatte 2 sowie eine Edelstahlplatte 5, die über eine Klebeschicht 6 mit der Tragplatte 2 verbunden ist. Bei dieser Ausgestaltung handelt es sich bei der Tragplatte 2 beispielsweise um eine mitteldichte oder bevorzugt hochdichte Faserplatte, also eine Platte bestehend aus Holzfasern und einem duroplastischen Bindemittel, das die Fasern zu der Plattenform verbindet. Da die Faserstoffe in dem duroplastischen Bindemittel, beispielsweise auf Basis von Harnstoff-Formaldehyd, eingebunden sind, zeigt eine solche Platte eine sehr gute Feuchtebeständigkeit, weshalb die erfindungsgemäße Bodenplatte selbst bei Verwendung einer solchen hochdichten Faserplatte als Tragplatte 2 in Feuchträumen verwendet werden kann.

Die Edelstahlplatte 5 weist bei dieser Ausgestaltung an allen ihren Längskanten eine Fase 9 auf, ist also kantenseitig gebrochen, beispielsweise mit einem Fasenwinkel von 30° oder 45°. Zwei nebeneinander angeordnete Bodenplatten 1 ergänzen sich folglich mit ihren Fasen, so dass sie eine definierte Rillenstruktur ergibt. Selbstverständlich ist es auch bei der Bodenplatte 1 aus Figur 1 und 2 denkbar, eine solche Fase vorzusehen.

Zusätzlich weist die Bodenplatte 1 aus Figur 3 eine an der Unterseite der Tragplatte 2 über eine Klebeverbindung 10 fixierte Dämmschicht 11 auf, die hier aus einer Gummimatte 12 besteht. Diese ist über ein geeignetes Klebemittel, das in der Lage ist, einen festen Verbund zwischen der hochdichten Faserplatte und ihr selbst herzustellen, verklebt.

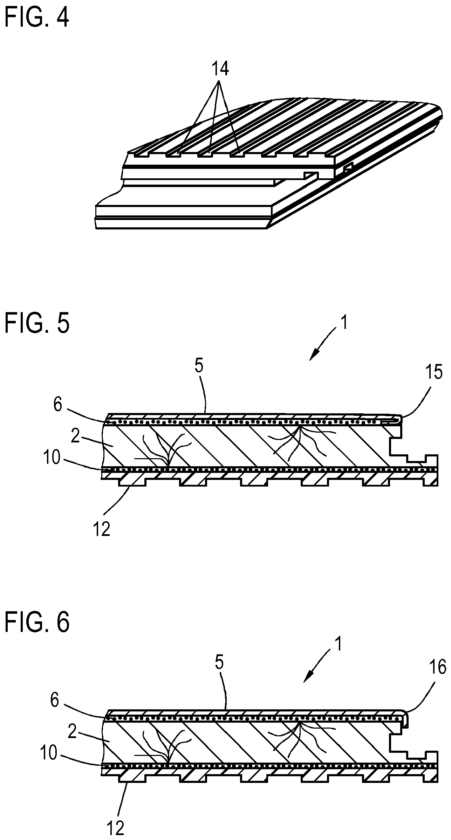

Ersichtlich ist an der Unterseite der Gummimatte 12 eine Strukturierung 13 in Form von längslaufenden Nuten 14 vorgesehen, die, siehe Figur 4, die eine Untenansicht zeigt, parallel zueinander verlaufen. Über diese Strukturierung 13 respektive die Nuten 14 ist eine Hinterlüftung möglich, das heißt, dass selbst im verlegten Zustand ein Luftpolster gegeben ist, über das Luftfeuchte abtransportiert werden könnte. Die Gummimatte 12 als solche ist ohnehin wasserabweisend.

Selbstverständlich ist es denkbar, auch bei der Bodenplatte 1 aus den Figuren 1 und 2 eine solche Dämmschicht 11 in Form der strukturierten Gummimatte 12 vorzusehen.

Figur 5 zeigt eine weitere Ausgestaltung einer erfindungsgemäßen Bodenplatte 1, wobei diese nur als Teilansicht im Schnitt gezeigt ist. Der Aufbau entspricht dem, wie er zur Bodenplatte 1 gemäß Figur 3 und 4 gezeigt ist. Vorgesehen ist also wiederum die Edelstahlschicht 5, die über die Klebeschicht 6 mit der Tragplatte 2 verbunden ist, die an ihrer Unterseite eine über eine Klebeschicht 10 befestigte Gummimatte 12, die in entsprechender Weise strukturiert ist, aufweist.

Bei dieser Erfindungsausgestaltung ist die Edelstahlplatte 5 im Randbereich umgebogen, weist also eine Randbiegung 15 auf. Aufgrund dieser Umbiegung 15 ergibt sich ein geringer Abstand zwischen Edelstahlplatte 5 und Tragplatte 2, der mit dem Klebemittel der Klebeschicht 6 gefüllt ist.

Figur 6 zeigt schließlich eine ähnliche Ausgestaltung einer Bodenplatte 1, wie in Figur 5 gezeigt ist, jedoch ist hier der Kantenbereich der Edelstahlplatte 5 mit einer Abkantung 16 versehen, die die Tragplatte 2 ein Stück weit randseitig übergreift, wie in Figur 6 ersichtlich ist. Da alle vier Kanten der Edelstahlplatte 5 abgekantet sind, wird die Tragplatte 2 folglich in die abgekantete Edelstahlplatte 5 quasi eingesetzt, nachdem zuvor das Klebemittel ein- oder aufgebracht wurde. Infolge des randseitigen Übergriffs der Tragplatte 2 ist diese zusätzlich randseitig geschützt.

Die Ausgestaltungen, wie in den Figuren 5 und 6 gezeigt, können vorgesehen sein, wobei die Tragplatte 2 entweder als mittel- oder hochdichte Faserplatte oder dann bevorzugt als Kunststofftragplatte, wie zu Figur 1 beschrieben, ausgeführt ist.

## Patentansprüche

1. Bodenplatte zur schwimmenden Verlegung, bestehend aus einer Tragplatte mit einer seitlichen Nut-Feder-Struktur und einer auf dieser aufgebrachten, die Sichtfläche bildenden Oberflächenschicht, wobei die Oberflächenschicht (4) eine Edelstahlplatte (5) ist und an der Unterseite der Tragplatte (2) eine mattenartige Dämmschicht (11) angeordnet ist, die über eine Klebeverbindung (10) mit der Tragplatte (2) verbunden ist, **dadurch gekennzeichnet, dass** die Dämmschicht (11) an ihrer Unterseite eine der Hinterlüftung dienende Strukturierung (13) in Form mehrerer Nuten (14), die sich von einer Dämmschichtseite zur gegenüberliegenden erstrecken, aufweist.

2. Bodenplatte nach Anspruch 1, **dadurch gekennzeichnet, dass** die Edelstahlplatte (5) mit der Tragplatte (2) über eine Klebeverbindung (6) verbunden ist.

3. Bodenplatte nach Anspruch 1 oder 2, **dadurch gekennzeichnet, dass** die Edelstahlplatte (5) an ihren oberen Rändern eine Fase (9) aufweist.

4. Bodenplatte nach einem der vorangehenden Ansprüche, **dadurch gekennzeichnet, dass** die Edelstahlplatte (5) mit ihren Rändern (15, 16) umgebogen ist, und gegebenenfalls die Tragplatte (2) randseitig übergreift.

5. Bodenplatte nach einem der vorangehenden Ansprüche, **dadurch gekennzeichnet, dass** die Edelstahlplatte (5) eine Dicke von 0,5 - 3 mm aufweist.

6. Bodenplatte nach einem der vorangehenden Ansprüche, **dadurch gekennzeichnet, dass** die Edelstahlplatte (5) an ihrer Sichtseite (7) eine Strukturierung (8) aufweist.

7. Bodenplatte nach einem der vorangehenden Ansprüche, **dadurch gekennzeichnet, dass** die Tragplatte (2) aus einem Kunststoff besteht, oder eine mittel- oder hochdichte Faserplatte ist.

8. Bodenplatte nach einem der vorangehenden Ansprüche, **dadurch gekennzeichnet, dass** sich die Nuten (14) geradlinig von der Dämmdichtseite zur gegenüberliegenden erstrecken.

9. Bodenplatte nach Anspruch 8, **dadurch gekennzeichnet, dass** die Dämmschicht (11) eine Gummimatte (12) ist.

## Claims

1. Base plate for installation in a floating manner, composed of a support plate having a lateral tongue-and-groove structure and a surface layer that forms the visible face and is attached to the top of said support plate, wherein the surface layer (4) is a stainless steel plate (5) and a mat-type insulation layer (11) is disposed on the lower side of the support plate (2), said insulation layer (11) by way of an adhesive connection (10) being connected to the support plate (2),
**characterized in that**
the insulation layer (11) on the lower side thereof has a structured feature (13), serving the ventilation of the rear, in the form of a plurality of grooves (14) which extend from one side of the insulation layer to another.

2. Base plate according to Claim 1,
**characterized in that**
the stainless steel plate (5) is connected to the support plate (2) by way of an adhesive connection (6) .

3. Base plate according to Claim 1 or 2,
**characterized in that**
the stainless steel plate (5) at the upper peripheries thereof has a chamfer (9).

4. Base plate according to one of the preceding claims,
**characterized in that**
the stainless steel plate (5) by way of the peripheries (15, 16) thereof is bent back and optionally engages across the peripheries of the support plate (2) .

5. Base plate according to one of the preceding claims,
**characterized in that**
the stainless steel plate (5) has a thickness of 0.5 to 3 mm.

6. Base plate according to one of the preceding claims,
**characterized in that**
the stainless steel plate (5) on the visible side (7) thereof has a structured feature (8).

7. Base plate according to one of the preceding claims,
**characterized in that**
the support plate (2) is composed of a plastics material, or is a medium-density or high-density fibreboard.

8. Base plate according to one of the preceding claims,
**characterized in that**
the grooves (14) extend in a straight line from the insulation layer side to the opposite side.

9. Base plate according to Claim 8,
**characterized in that**
the insulation layer (11) is a rubber mat (12).

## Revendications

1. Panneau de sol pour une installation flottante, constitué d'un panneau de support avec une structure latérale à rainure et languette, et une couche de surface montée sur celui-ci, formant la face visible, la couche de surface (4) étant un panneau en acier inoxydable (5) et une couche d'amortissement (11) de type natte étant disposée au niveau du côté inférieur du panneau de support (2), laquelle est connectée par le biais d'un assemblage collé (10) au panneau de support (2), **caractérisé en ce que** la couche d'amortissement (11) présente au niveau de son côté inférieur une structuration (13) servant à la ventilation arrière, sous forme de plusieurs rainures (14) qui s'étendent depuis un côté de la couche d'amortissement jusqu'au côté opposé.

2. Panneau de sol selon la revendication 1, **caractérisé en ce que** le panneau en acier inoxydable (5) est connecté au panneau de support (2) par le biais d'un assemblage collé (6).

3. Panneau de sol selon la revendication 1 ou 2, **caractérisé en ce que** le panneau en acier inoxydable (5) présente un biseau (9) au niveau de ses bords supérieurs.

4. Panneau de sol selon l'une quelconque des revendications précédentes, **caractérisé en ce que** le panneau en acier inoxydable (5) avec ses bords (15, 16) est recourbé et vient éventuellement en prise par le dessus, du côté du bord, avec le panneau de support (2).

5. Panneau de sol selon l'une quelconque des revendications précédentes, **caractérisé en ce que** le panneau en acier inoxydable (5) présente une épaisseur de 0,5 à 3 mm.

6. Panneau de sol selon l'une quelconque des revendications précédentes, **caractérisé en ce que** le panneau en acier inoxydable (5) présente une structuration (8) au niveau de son côté visible (7) .

7. Panneau de sol selon l'une quelconque des revendications précédentes, **caractérisé en ce que** le panneau de support (2) se compose d'un plastique ou est un panneau de fibres à moyenne densité ou à haute densité.

8. Panneau de sol selon l'une quelconque des revendications précédentes, **caractérisé en ce que** les rainures (14) s'étendent en ligne droite depuis le côté de la couche d'amortissement jusqu'au côté opposé.

9. Panneau de sol selon la revendication 8, **caractérisé en ce que** la couche d'amortissement (11) est une natte en caoutchouc (12).
